# EUROPÄISCHE PATENTSCHRIFT

(11) **EP 0 663 676 B1**
(45) Veröffentlichungstag und Bekanntmachung des Hinweises auf die Patenterteilung: **23.04.1997**
(21) Anmeldenummer: 94118487.1
(22) Anmeldetag: 24.11.1994
(51) Int. Cl.: H01H 13/64, B66F 9/20

(54) **Tastschalter für ein Flurförderzeug, insbesondere Kommissionierer**
Push button switch for a fork lift truck, especially order picker
Interrupteur à bouton-poussoir pour un chariot de manutention, notamment appareil de commission

(30) Priorität: 12.01.1994 DE 9400397 U
(43) Veröffentlichungstag der Anmeldung: 19.07.1995
(73) Patentinhaber: Jungheinrich Aktiengesellschaft, D-22047 Hamburg (DE)
(72) Erfinder: Cord, Hans-Jörg, Dipl.-Ing., D-22299 Hamburg (DE)
(74) Vertreter: Patentanwälte Hauck, Graalfs, Wehnert, Döring, Siemons

(56) Entgegenhaltungen:
- EP-A- 0 394 057
- DE-B- 2 254 763
- DE-U- 9 306 921

## Beschreibung

Die Erfindung bezieht sich auf einen Tastschalter für ein Flurförderzeug, insbesondere Kommissionierer, entsprechend dem Oberbegriff des Anspruchs 1.

Es ist bekannt, für Kommissionierfahrzeuge einen Tastbetrieb vorzusehen, der es dem Bediener erlaubt, das Fahrzeug außerhalb der Fahrzeugkontur in Mitgängergeschwindigkeit zu versetzen. Der Fahrer braucht bei kleinen zurückzulegenden Wegstrecken deshalb das Fahrzeug nicht jedesmal zu besteigen. Falls der Tastschalter jedoch eine Störung erleidet, beispielsweise durch Klemmen der Schalttaste und ein Öffnen der Kontakte verhindert wird, befindet sich das Fahrzeug in einem unkontrollierten Zustand und stellt mithin ein Sicherheitsrisiko dar.

Bei Schneidemaschinen, Pressen oder ähnlichen Fertigungsvorrichtungen, wird ein Schutz dadurch erhalten, daß vom Bediener eine sogenannte Zweihandbedienung vorgenommen werden muß. Nur wenn beide Hände des Bedieners sich an einem vorgegebenen Ort befinden und z.B. jeweils Tastschalter betätigen, kann eine Funktion ausgelöst werden. Eine derartige Zweihandbedienung kommt indessen für Kommissionierer nicht in Betracht, weil insbesondere dadurch das Mitgehen mit dem Fahrzeug aus ergonomischen Gründen unzweckmäßig ist.

Eine andere Lösung des Problems könnte darin bestehen, mit Hilfe einer Lichtschranke im Fahrzeugbereich einen zusätzlichen Schutz zu erhalten. Solange die Lichtschranke bei Betätigung des Tastschalters unterbrochen ist, wird die Funktion ausgelöst. Wird hingegen die Lichtschranke freigegeben, kommt es zu einer Unterbrechung. Beim Betrieb von Flurförderzeugen ist jedoch problematisch, die Lichtschranke funktionssicher zu halten, da Lichtquelle und/oder Empfänger oder Reflektor leicht verschmutzen können.

Aus der OE 317 703 ist bekanntgeworden, ein Flurförderzeug mit einem manuell betätigbaren Lenksystem mit einem spezifischen Lenkrad auszubilden, indem im Lenkrad ein Metallkern eingebettet ist und ein zweiter Leiter im Abstand von dem Metallkern um das Lenkrad verläuft. Die beiden Leiter bilden einen kapazitiven Übertrager, der den Zweig einer Kapazitätsbrücke bildet, die ihrerseits einen monostabilen Schaltkreis schaltet. Ein derartiges kapazitives Überwachungssystem ist jedoch verhältnismäßig aufwendig und nicht "schnittstellenkompatibel" im Hinblick auf den bereits jetzt verwendeten Taster für den Mitgehbetrieb.

Der Erfindung liegt die Aufgabe zugrunde, einen Tastschalter für ein Flurförderzeug, insbesondere Kommissionierer, zu schaffen, der sehr einfach aufgebaut ist und eine größere Sicherheit gegen Kontaktblockierungen bietet und mit dem vorhandene Tastschalter ausgetauscht werden können.

Diese Aufgabe wird durch die Merkmale des Anspruchs 1 gelöst.

Bei dem erfindungsgemäßen Tastschalter ist ein zweites Tastelement in die erste Schalttaste integriert. Beide Tastelemente schließen Kontakte, wenn sie betätigt werden. Die erste Schalttaste wird jedoch mechanisch über das Tastelement betätigt, so daß bei einer Blockierung eines Schalters der zweite noch in die Aus-Stellung gelangen kann. Es ist eher unwahrscheinlich, daß zwei Tastelemente gleichzeitig durch äußere Einwirkung oder sonstige Umstände blockiert werden. Der erfindungsgemäße Tastschalter erhöht daher die Sicherheit beim Betrieb eines Flurförderzeugs im Mitgehbetrieb, ist jedoch andererseits äußerst einfach aufgebaut.

Nach einer Ausgestaltung der Erfindung sind die Kontaktpaare, die von beiden Tastelementen betätigt werden, mechanisch in Reihe geschaltet. Dadurch ist mechanisch eine UND-Schaltung gebildet, so daß die UND-Bedingung erfüllt sein muß, wenn der Fahrzeugmotor eingeschaltet werden soll. Es besteht jedoch auch die Möglichkeit, die beiden Kontaktpaare mit einer Logikschaltung zu verbinden, welche die gewünschte Funktion nur freigibt, wenn beide Kontaktpaare durch die zugehörigen Tastelemente geschlossen sind. Es ist zwar denkbar, die Tastschalter elektrisch in Reihe zu schalten. Aufgrund der Leistungsdaten, z.B. bei Verwendung eines Folientasters für den zweiten Taster, kann letzterer nur ein Relais oder dergleichen schalten.

Es sind verschiedene Möglichkeiten denkbar, einen Tastschalter konstruktiv zu verwirklichen. Es ist bekannt, die Schalttaste als federbelastete Kappe auszuführen, die in einer Öffnung verschieblich geführt ist. Bei einem Verschieben der Kappe nach unten wird eine Kontaktwippe betätigt und somit ein Kontaktschluß erzeugt. In diesem Zusammenhang sieht eine Ausgestaltung der Erfindung vor, daß das zweite Tastelement in einer Ausnehmung der Kappe gelagert ist. In der Ausnehmung kann zum Beispiel ein Tastelement verschieblich gelagert sein, das seinerseits von einer Feder vorgespannt ist. Wenn es betätigt wird, wird ein weiteres Kontaktpaar geschlossen, das über flexible Leiter, die durch die Kappe des ersten Tasters geführt sind, mit einem stationären Anschluß verbunden ist. Eine andere Möglichkeit besteht erfindungsgemäß darin, daß in der Ausnehmung der Kappe ein Plättchen aus flexiblem leitenden Material angeordnet ist, z.B. eine als zweites Tastelement dienende Zunge oder dergleichen. Ein sogenannter Folientaster, der in der Ausnehmung angeordnet wird, ist wegen seiner extrem flachen Bauweise besonders geeignet.

Die Erfindung wird nachfolgend anhand von Zeichnungen näher erläutert.
- Fig. 1: zeigt schematisch einen Tastschalter nach der Erfindung.
- Fig. 2: zeigt schematisch perspektivisch eine konstruktive Ausgestaltung eines Tastschalters nach der Erfindung.
- Fig. 3: zeigt schematisch im Schnitt den Aufbau des Schalters nach Fig. 2.

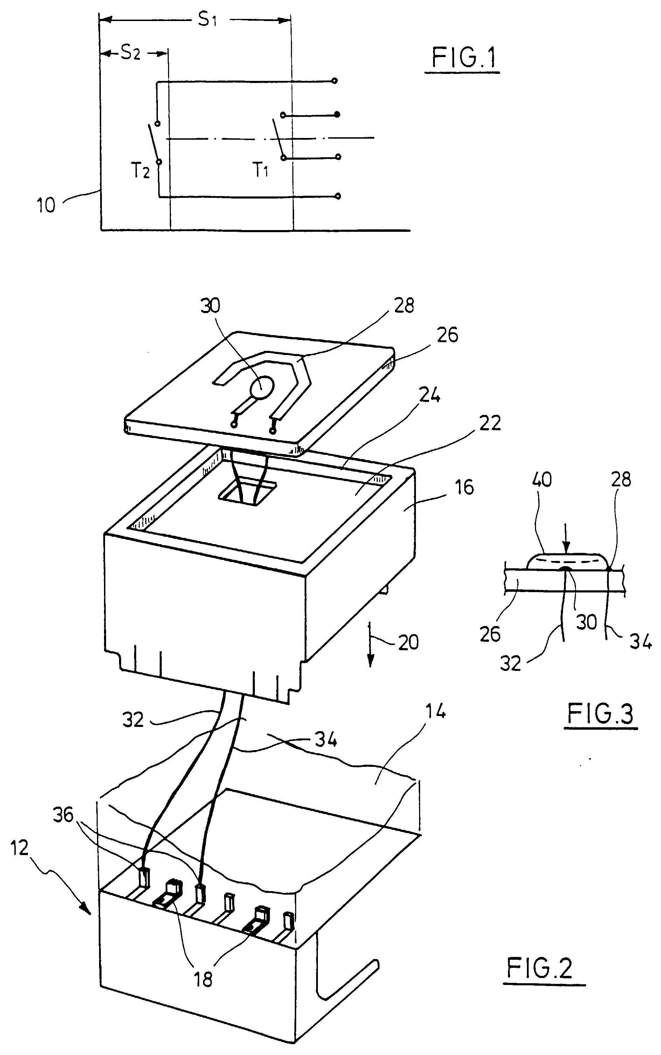

In Fig. 1 ist ein Tastschalter Tl angedeutet, der eine elektrische Last, beispielsweise einen Fahrmotor, schaltet. Ein Taster 10 muß einen Weg sl zurücklegen, um den Kontaktschluß auszulösen. Ein zweiter Tastschalter T2 wird von einem Taster betätigt, der auf den Taster 10 montiert ist (nicht dargestellt). Der Taster muß einen Weg s2 zurücklegen, um für den Tastschalter T2 einen Kontaktschluß zu erzeugen. Die Tastschalter T1 und T2 sind mit einer nicht dargestellten Logikschaltung verbunden, die die entsprechende Funktion nur freigibt, wenn beide Tastschalter T1 und T2 geschlossen sind, beispielsweise die Einschaltung des Fahrmotors. Entscheidend ist, daß beide Tastschalter T1 und T2 mechanisch unabhängig betätigt sind, wodurch eine Sicherheit gegeben ist, falls die mechanische Betätigung eines Schalters blockiert oder dergleichen.

Fig. 2 stellt eine mögliche Realisierung der Schaltunganordnung nach Fig. 1 dar. Ein stationäres Gehäuse 12 in Fig. 2, das im einzelnen nicht beschrieben werden soll, weist einen Abschnitt 14 zur Aufnahme einer Kappe 16 auf, die gleitend im Gehäuseteil 14 geführt ist und von einer nicht gezeigten Feder in eine obere Stellung vorgespannt ist. Das Gehäuse weist einen Kontakt 18 auf, der geschlossen wird, wenn die Kappe 16 im montierten Zustand in Richtung Kappe 20 gedrückt wird. Dadurch wird zum Beispiel eine erste Verbindung zur Auslösung einer Funktion, beispielsweise Einschaltung des Fahrmotors, vorgenommen. In der Kappe befindet sich versenkt eine Querwand 22, die mithin über sich eine rechteckförmige Ausnehmung 24 bildet, in der ein Plättchen 26 passend aufgenommen werden kann. Eine annähernd U-förmige Leiterbahn 28 auf dem Plättchen 26 bildet einen ersten Kontaktabschnitt und eine Zunge 30 einen zweiten Kontaktabschnitt. Sie werden überbrückt von einem flexiblen Metallplättchen 40 (Fig. 3), das gegen den Kontaktabschnitt gedrückt werden kann, um die Abschnitte 28, 30 miteinander zu verbinden. Sie sind über flexible Leitungen 32, 34, die durch eine Öffnung in der Wand 22 hindurchgeführt sind, mit einem Kontaktpaar 36 am Gehäuse 12 verbunden. Die Kontaktabschnitte und das Plättchen 40, das als sog. Knackfrosch ausgebildet ist, können von einer nicht leitenden Folie abgedeckt sein (Folientaster oder -schalter). Werden die Kontaktabschnitte 28, 30 miteinander verbunden, wird damit zunächst der zugehörige Tastschalter geschlossen (vergleichbar Tastschalter T2 in Fig. 1). Ein weiteres Drücken auf den Folientaster führt zu einer Verschiebung der Kappe 16 nach unten, so daß das Kontaktpaar 18 geschlossen wird, entsprechend dem Tastschalter T1 nach Fig. 1. Mithin ist die erforderliche UND-Bedingung erfüllt, und die gewünschte Funktion kann ausgelöst werden.

## Patentansprüche

1. Tastschalter für ein Flurförderzeug, der von außerhalb des Fahrzeugs betätigbar ist, insbesondere für Kommissionierer, mit einer vorzugsweise federbelasteten im betätigten Zustand zwei Schaltkontakte (18) schließenden Schalttaste (16), dadurch gekennzeichnet, daß an der Schalttaste (16) ein zweites Tastelement (30) angeordnet ist dergestalt, daß bei seiner Betätigung zwei weitere Schaltkontakte verbunden werden und zugleich die erste Schalttaste (16) betätigt wird und daß erstes und zweites Kontaktpaar mit einer Logikschaltung verbunden sind, welche eine Funktion nur freigibt, wenn beide Kontaktpaare verbunden sind.

2. Tastschalter nach Anspruch 1, dadurch gekennzeichnet, daß erstes (18) und zweites (36) Kontaktpaar mechanisch in Reihe geschaltet sind.

3. Tastschalter nach Anspruch 1 oder 2, dadurch gekennzeichnet, daß der Schaltweg (s2) des zweiten Tastschalters (T2) kürzer ist als der des ersten Tastschalters (T1).

4. Tastschalter nach einem der Ansprüche 1 bis 3, dadurch gekennzeichnet, daß die Schalttaste als Kappe (16) ausgebildet und das zweite Tastelement (30) in einer oberen Ausnehmung (24) der Kappe (16) gelagert ist.

5. Tastschalter nach Anspruch 4, dadurch gekennzeichnet, daß in der Ausnehmung (24) der Kappe (16) ein Folientastschalter(40, 28, 30) angeordnet ist.

## Claims

1. Push-button switch for a floor truck which can be actuated external to the vehicle, in particular for an order picker, comprising a preferably spring-biased push-button (16) closing a pair of contact pieces (18) when being actuated, characterized in that a second push-button element (30) is attached to said push-button (16) such that a further pair of contact pieces is connected when being actuated, while said first push button (16) is being actuated simultaneously and that said first and second pair of contact pieces is connected to a logic circuitry releasing a function only when both pairs of contacts are connected.

2. The push-button switch of claim 1, characterized in that said first (18) and second (36) pair of contacts are mechanically arranged in series.

3. The push-button switch of claim 1 or 2, characterized in that the actuating distance (s2) of said second push-button switch (T2) is shorter than that of said first push-button switch (T1).

4. The push-button switch of one of claims 1 to 3, characterized in that the push-button is defined by a top member (16) and that said second push-button element (30) is supported in an upper recess (24) of said top member (16).

5. The push-button switch of claim 4, characterized in that a foil-type push-button switch (40, 28, 30) is received in said recess (24) of said top member (16).

## Revendications

1. Commutateur à poussoir, destiné à un chariot de manutention au sol et qui peut être actionné depuis l'extérieur du véhicule, en particulier destiné à un chariot pour livreur, comportant une touche de commande (16), sollicité, de préférence par un ressort et fermant, en état enfoncé, deux contacts (18)
caractérisé en ce que
sur la touche de commande (16), est disposé un deuxième élément-poussoir (30) de telle façon que, quand on l'actionne, deux autres contacts sont reliés entre eux, et, en même temps, la première touche de commande (16) est actionnée, et en ce que les première et deuxième paires de contacts sont reliées à un circuit logique qui ne libère une fonction que si les deux paires de contacts sont reliées.

2. Commutateur à poussoir suivant la revendication 1, caractérisé en ce que la première paire de contacts (18), et la deuxième paire de contacts (30) sont montées mécaniquement en série.

3. Commutateur à poussoir suivant la revendication 1 ou la revendication 2, caractérisé en ce que la course de commutation (s2) du deuxième commutateur à poussoir (T2) est plus courte que celle du premier commutateur à poussoir (T1).

4. Commutateur à poussoir suivant l'une des revendications 1 à 3, caractérisé en ce que la touche de commande est réalisée sous la forme d'un chapeau (16) et en ce que le deuxième élément-poussoir (30) est monté dans un évidement (24) du chapeau (16).

5. Commutateur à poussoir suivant la revendication 4, caractérisé en ce que, dans l'évidement (24) du chapeau (16), est disposé un commutateur à poussoir (40, 28, 30) recouvert d'une feuille de protection.
